(19) Europäisches Patentamt
European Patent Office
Office européen des brevets

(11) Veröffentlichungsnummer: **0 154 822**
**B1**

(12) **EUROPÄISCHE PATENTSCHRIFT**

(45) Veröffentlichungstag der Patentschrift: **20.05.87**

(51) Int. Cl.⁴: **C 09 J 3/14,** C 08 F 220/00

(21) Anmeldenummer: **85101527.1**

(22) Anmeldetag: **13.02.85**

(54) **Anaerob härtende Kleb- oder Dichtstoffzusammensetzung.**

(30) Priorität: **24.02.84 DE 3406708**

(43) Veröffentlichungstag der Anmeldung: **18.09.85 Patentblatt 85/38**

(45) Bekanntmachung des Hinweises auf die Patenterteilung: **20.05.87 Patentblatt 87/21**

(84) Benannte Vertragsstaaten: **DE FR GB IT**

(56) Entgegenhaltungen:
**FR-A-2 535 335**
**US-A-4 414 347**

(73) Patentinhaber: **Teroson GmbH, Hans- Bunte-Strasse 4, D-6900 Heidelberg 1 (DE)**

(72) Erfinder: **Reich, Karl, Dr., Finkenhof 55, D-6719 Carlsberg (DE)**

(74) Vertreter: **UEXKÜLL & STOLBERG Patentanwälte, Beselerstrasse 4, D-2000 Hamburg 52 (DE)**

**EP 0 154 822 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Anaerob härtende Zusammensetzungen auf Acrylat- bzw. Methacrylatbasis sind dem Fachmann seit langem als zuverlässige Kleb- und Dichtstoffe bekannt, welche aufgrund ihres Aufbaus besonders auf metallischen Werkstoffen in vielfältiger Weise zum Einsatz gelangen. Obwohl mit solchen Systemen auf den üblichen Substraten Abbindezeiten erzielt werden, die im Bereich zwischen 5 bis 20 min. liegen, ist es für manche Anwendungen wünschenswert, Abbindezeiten von deutlich unter 1 min. zu erreichen. Dies gilt insbesondere für Verklebungen oder Abdichtungen, die an einem Fließband mit vorgegebenen Taktzeiten vorgenommen werden sollen, da hier eine zu lange Abbindezeit die Produktionskapazität und damit die Wirtschaftlichkeit des Verfahrens einschränkt.

Aus diesem Grund hat es nicht an Versuchen gefehlt, durch geeignete Maßnahmen eine Verkürzung der Abbindezeiten zu erreichen. Allen diesen Maßnahmen ist jedoch gemeinsam, daß entweder ein System aus Klebstoff und Härter, also zwei Komponenten, welche unmittelbar vor Gebrauch zu mischen sind, Verwendung findet, oder aber ein Beschleuniger in Form einer Lösung in geeigneter Weise auf eines der Fügeteile aufgebracht wird, während das andere mit der Kleb- oder Dichtmasse versehen wird. Als größter Nachteil des Vermischens wird allgemein angesehen, daß die Verwendungsfähigkeit des damit erhaltenen Klebstoffs zeitlich begrenzt ist, da im allgemeinen nach 1 bis 2 Stunden bereits eine Aushärtung einsetzt. Verwendet man einen Beschleuniger in Form eines Primers, der auf eines der beiden Fügeteile aufgetragen wird, so ist ein zusätzlicher Arbeitsgang notwendig, es kommt oft zu einer Verunreinigung der Umgebung der Klebestelle, und außerdem ist die Durchhärtung nicht selten deshalb mangelhaft, weil im Klebespalt eine Vermischung von Klebstoff und Beschleuniger nur durch Diffusion erfolgen kann.

Ein in neuerer Zeit eingeschlagener Weg, Klebstoffe mit kurzer Abbindezeit zu erhalten, besteht darin, einen geeigneten Härtungskatalysator in Form von Mikrokapseln dem Klebstoff zuzusetzen, welche bei der Verklebung durch Ausüben von Druck ihren Inhalt freigeben und damit die Aushärtung einleiten (DE-AS 2 247 468). Aufgrund der Nachteile dieses Systems, teilweise schon während der Lagerung den Härtungskatalysator freizusetzen und auch der Tatsache, daß es oft speziell bei größeren Klebefugen schwierig ist, alle Mikrokapseln zu brechen und so eine befriedigende Härtungsgeschwindigkeit zu erzielen, konnte sich diese Ausführungsform in der Praxis nicht durchsetzen.

Allgemein bekannt ist die Tatsache, daß Verbindungen mit sauren Eigenschaften eine Erhöhung der Aushärtungsgeschwindigkeit bewirken. Dies äußert sich darin, daß nahezu alle anaeroben Klebstoffe einen pH-Wert zwischen 2 und 4 aufweisen. Hervorgerufen wird dieser Säuregrad durch den Zusatz von Carbonsäuren und anderen sauren Substanzen, vergl. DE-PS 2 749 975, in der insbesondere Maleinsäure, Phosphorsäure und Methansulfonsäure als Beschleuniger angeführt werden und darauf hingewiesen wird, daß Säuren mit einem pKa unter etwa 1, wie z.B. die Sulfonsäuren, die Lagerstabilität beeinträchtigen und zu einer Aushärtung bereits während der Lagerung führen. Bei einer Nachprüfung konnten diese Angaben bestätigt werden. Setzt man beispielsweise Benzolsulfonsäure zu einer handelsüblichen anaeroben Klebstoffmasse zu, so tritt innerhalb von 15 - 20 min. ohne Gegenwart eines metallischen Substrats eine Aushärtung unter starker Erwarmung ein.

Überraschenderweise wurde nun gefunden, daß es bei Zusatz von Trimethylsilylestern aromatischer Sulfonsäuren nicht zur vorzeitigen Polymerisation wie im oben beschriebenen Fall kommt, daß jedoch eine außerordentliche Verkürzung der Abbindezeit der anaeroben Klebstoffmasse auf metallischen und nichtmetallischen Substraten zu verzeichnen ist. Man erhält durch diese Maßnahme einen Klebstoff, der über eine ausreichende Topfzeit verfügt und für einen Einsatz an automatischen Fertigungsanlagen geeignet ist, da einerseits ein Spannen der zu verklebenden Fügeteile entfällt, andererseits ein vorzeitiges Aushärten in der Dosiereinrichtung nicht zu befürchten ist.

Auch ein weitverbreiteter Nachteil von durch zusätzliche Beschleuniger aktivierten anaeroben Klebstoffen, nämlich ein Abfall der Endfestigkeit ist nicht anzutreffen. Trotz der sehr kurzen Zeiten bis zum Erreichen der Endfestigkeit liegt diese durchweg höher als bei einem Vergleichsklebstoff ohne den erfindungsgemäßen Aktivator.

Gegenstand der Erfindung ist demgemäß eine anaerob härtende Kleb- oder Dichtstoffzusammensetzung auf Basis von Mono-, Di- und/oder Tri(meth)acrylaten, einem Redoxsystem, einem Sulfamidderivat und einem sterisch gehinderten Phenol als Stabilisatorsystem sowie üblichen Zusätzen, welche dadurch gekennzeichnet ist, daß sie als Aktivator 0,1-10 Gew.%, vorzugsweise 2 bis 5 Gew.% eines Trimethylsilylesters einer aromatischen Sulfonsäure gemäß Formel I

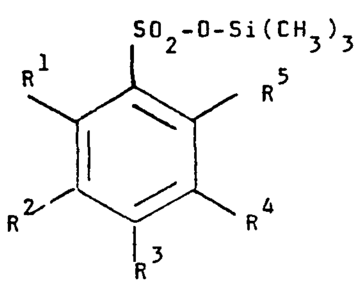

I

oder deren Gemische enthält, wobei die Reste $R^1$ bis $R^5$ jeweils unabhängig voneinander ein Wasserstoffatom, eine $C_1$-$C_4$-Alkylgruppe, ein Halogenatom oder eine $C_1$-$C_4$-Alkoxygruppe, $R^3$ auch eine Phenylgruppe, eine $C_1$-$C_4$-Alkylphenylgruppe oder eine Phenyloxygruppe und $R^1$ und $R^2$ oder $R^2$ und $R^3$ jeweils zusammen auch einen ankondensierten Benzol- oder Naphthalinring bedeuten.

Beispiele für besonders geeignete Trimethylsilylester aromatischer Sulfonsäuren zur Verwendung in den erfindungsgemäßen Zusammensetzungen sind:

Benzolsulfonsäure-trimethylsilylester
4-Methylbenzolsulfonsäure-trimethylsilylester
2-Chlorbenzolsulfonsäure-trimethylsilylester
4-Chlorbenzolsulfonsäure-trimethylsilylester
2,4-Dichlorbenzolsulfonsäure-trimethylsilylester
4-Hydroxybenzolsulfonsäure-trimethylsilylester
4-Methoxybenzolsulfonsäure-trimethylsilylester
Naphthalin-1-sulfonsäure-trimethylsilylester
Naphthalin-2-sulfonsäure-trimethylsilylester
Anthracen-2-sulfonsäure-trimethylsilylester.

Die aromatischen Sulfonsäuresilylester sind durch direkte Einführung der Trimethylsilyloxysulfonylgruppe in den aromatischen Ring mit Hilfe von Chlorsulfonsäure-trimethylsilylester in hoher Ausbeute zugänglich. Die Reaktionsfolge verläuft nach folgenden Gleichungen:

$$Cl{-}SO_3H + (CH_3)_3\ Si\ Cl \longrightarrow Cl{-}SO_2{-}O{-}Si(CH_3)_3 + H\ Cl \qquad (1)$$

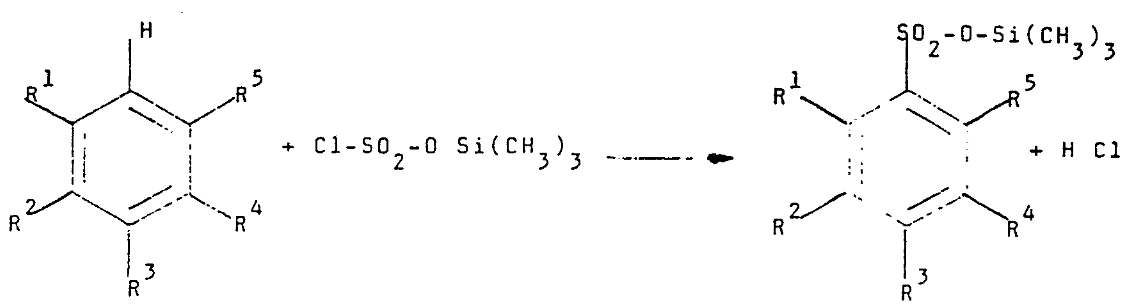


(2)

Eine ausführliche Übersicht über die Herstellung dieser Verbindungen haben K. Hofmann u. G. Simchen in Liebigs Ann. Chem. 1982, 282-297 gegeben.

Bei der Untersuchung der Wirksamkeit der aromatischen Sulfonsäuretrimethylsilylester in anaeroben Klebstoffen zeigte sich, daß zwar alle Vertreter eine Beschleunigung hervorrufen, jedoch die Beschleunigung und Lagerstabilität in hohem Maße von Art und Stellung der Substituenten im aromatischen Ring abhängen. Während die unsubstituierten Derivate eine starke Beschleunigung hervorrufen, verringert sich dieser Effekt bei zunehmender Substitution durch Gruppen mit +I-Effekt wie Alkylgrupen oder +M-Effekt wie Alkoxygruppen. Dies ist jedoch mit einem Anstieg der Lagerstabilität verknüpft. Durch Beachtung dieser Regeln kann eine Anpassung von Abbindegeschwindigkeit und Lagerstabilität an den jeweiligen Anwendungsfall vorgenommen werden.

Durch die außerordentliche Beschleunigung der Abbindezeit, die nach Zugabe von beispielsweise Benzolsulfonsäure-trimethylsilylester zu einem anaeroben Klebstoff auf Stahlprüfkörpern nur noch ca. 15 bis 20 sec. beträgt, bleibt die Lagerstabilität nicht unbeeinflußt. Während sie üblicherweise bei schnell abbindenden Zweikomponentenklebstoffen 1 bis 2 h beträgt, kann bei Raumtemperatur bei einer bevorzugten Ausführungsform des erfindungsgemäßen Systems mit 4 bis 6 Tagen gerechnet werden. Bei Lagerung bei 10 C verlängert sich die Zeit, innerhalb der der voll gebrauchsfertige Klebstoff keine Gelbildung zeigt, auf 15 bis 20 Tage. Diese Zeiten sind ausreichend, um z.B. am Fließband die Klebstoffe wie Einkomponentensysteme zu handhaben.

Um das schnelle Aushärteverhalten in Verbindung mit einer zufriedenstellenden Lagerstabilität optimal auszunutzen, kann es vorteilhaft sein, eine Verpackung für das System vorzusehen, die es erlaubt, im Anwendungsfall auf einfache Art zu einer einkomponentigen Mischung zu gelangen. Dies wird vorzugsweise dadurch erreicht, daß sich in einem den anaeroben Klebstoff enthaltenden Polyethylenbehälter ein kleiner, dünnwandiger Glasbehälter befindet, welcher mit dem Aktivator gefüllt ist. Im Bedarfsfall genügen ein leichter Druck auf den Glasbehälter, um ihn zu zerbrechen, und kurzes Durchschütteln, um seinen Inhalt gleichmäßig zu verteilen. Durch diese Maßnahme entspricht die Lagerstabilität des nicht aktivierten Systems dem üblichen Standard bei anaeroben Klebstoffen von mehr als 1 Jahr.

Obwohl die eigentliche Wirkung dieser Verbindungen noch nicht mit Sicherheit geklärt ist, kann vermutet werden, daß beim Auftrag der Klebstoffzusammensetzung auf ein Substrat durch die stets vorhandene

Oberflächenfeuchtigkeit eine partielle Hydrolyse des Silylesters eintritt und eine Aushärtung einsetzt, während bei Feuchtigkeitsausschluß dieser Vorgang unterbleibt.

Die Sulfamidderivate, welche als Stabilistoren geeignet sind, sind aus der DE-OS 31 37 306 bekannt. Sie entsprechen vorzugsweise der allgemeinen Formel II

$$R^1-\overset{O}{\overset{\|}{C}}-NH-SO_2-NH-\overset{O}{\overset{\|}{C}}-R^1 \qquad II$$

In dieser Formel können die Reste $R^1$ gleich oder verschieden sein und jeweils ein H-Atom oder einen gerad- oder verzweigtkettigen Alkylrest mit 1 bis 18 C-Atomen, einen Cycloalkylrest mit 3 bis 8 C-Atomen, einen Phenylmethylrest oder einen Alkoxyrest $-OR^2$ bedeuten, wobei $R^2$ ein gerad- oder verzweigtkettiger Alkylrest mit 1 bis 18 C-Atomen, ein Cycloalkylrest mit 3 bis 8 C-Atomen, ein Phenylrest, ein Phenylalkylrest mit 1 bis 4 C-Atomen in der Alkylgruppe oder ein Alkylphenylrest mit 1 bis 4 C-Atomen in der/den Alkylgrupp(en) ist. $R^1$ kann auch einen Trifluor- oder Trichlormethylrest oder einen Alkoxyrest $OR^2$ bedeuten, wobei $R^2$ ein Di- oder Triphenylmethylrest ist. Besonders bevorzugt ist Diacetylsulfamid, welches ggf. ohne vorherige Isolierung als Lösung, z.B. in THF, eingesetzt werden kann, wie dies in der DE-OS 31 37 306 beschrieben ist.

Die verwendeten Sulfamidderivate der allgemeinen Formel II zeigen für sich allein einen günstigen Einfluß auf die Lagerstabilität anaerob härtender Klebstoffe. Die Wirkung nimmt jedoch in erheblichem Maße zu, wenn die Sulfamide in Verbindung mit phenolischen Stabilisatoren (Antioxidantien) eingesetzt werden, wobei das Verhältnis von Sulfamid zu Phenol in einem breiten Bereich schwanken kann, so daß die Kombination der Verbindungen 1 bis 90 Gew.% des Sulfamidderivats und 99 bis 10 Gew.% eines phenolischen Antioxidationsmittels enthalten kann. Bevorzugt liegt das Verhältnis von Sulfamid zu phenolischem Antioxidationsmittel zwischen etwa 1:1 und 1:4; ein besonders günstiges Verhältnis beträgt 1:2. Bezogen auf die Klebstoffzusammensetzung finden etwa 0,1 bis 10 Gew.%, vorzugsweise 0,5 bis 5 Gew.% und insbesondere 0,8 bis 2 Gew.%, beispielsweise 1 Gew.% des Sulfamidderivats Verwendung.

Als Co-Stabilisatoren besonders geeignete Phenole entsprechen der allgemeinen Formel III

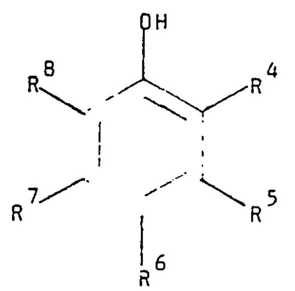

III

in der die Reste $R^4$, $R^5$, $R^7$ und $R^8$ jeweils ein H-Atom oder eine Alkylgruppe mit 1 bis 4 C-Atomen darstellen und der Rest $R^6$ entweder dieselbe Bedeutung hat oder eine Hydroxy- oder eine Methoxygruppe ist.

Bevorzugt werden sterisch gehinderte Phenole, wobei sich das 2,5-Di-tert.-butylhydrochinon besonders bewährt hat.

Die anaerob härtbaren Klebstoffe als solche sind dem Fachmann seit langem bekannt. Als polymerisierbare Monomere enthalten sie in der Regel Mono-, Di- oder Triacrylatester und/oder -methacrylatester. Geeignete Ester der Acrylsäure bzw. Methacrylsäure sind in der Literatur vielfach beschrieben worden, siehe z.B. US-PS 32 18 305. Durch Verwendung unterschiedlicher mono- oder polyfunktioneller Alkohole oder durch die Umsetzung von hydroxysubstituierten Acrylaten bzw. Methacrylaten mit Isocyanaten oder Carbonsäurederivaten können die polymerisierbaren Monomeren bzw. Oligomeren auf vielfältige Weise variiert werden, was ebenfalls aus der Literatur bekannt ist.

Die anaerob härtbaren Klebstoffmischungen auf Acrylat- bzw. Methacrylatbasis enthalten als Härtungsbeschleuniger ein Redoxsystem. Als Radikale bildende Initiatoren haben sich vor allem Hydroperoxide, insbesondere Cumolhydroperoxid bewährt. Als reduktive Komponente sind insbesondere tertiäre aromatische Amine, z.B. N,N-Dimethyl-4-toluidin oder heterocyclische sekundäre Amine mit hydriertem heterocyclischen Ring, z.B. 1,2,3,4-Tetryhydrochinolin, besonders geeignet, vergl. auch hinsichtlich weiterer geeigneter Komponenten des Redoxsytems die US-PS 32 18 305.

Darüber hinaus ist es aus der US-PS 32 18 305 bereits bekannt, die Beschleunigung der Aushärtung der Klebstoffmischungen zusätzlich noch durch die Zugabe eines organischen Sulfimids, z.B. von Benzosulfimid, zu verbessern.

Zur Erläuterung der Erfindung sollen die nachfolgenden Beispiele dienen.

**Beispiele 1 bis 8**

Der Nachweis der Wirksamkeit der erfindungsgemäßen Beschleuniger erfolgte an einer üblichen anaeroben Klebstoffbasis folgender Zusammensetzung:

Komponente Menge (Gew.%)
Triethylenglykol-dimethacrylat 79,000
2,5-Di-tert.-butyl-hydrochinon 2,000
Sulfamidstabilisator (Diacetylsulfamid hergestellt in Tetrahydrofuran gemäß DE-OS 31 37 306) 1,000
2,3-Dihydro-1,2-benzisothiazol-3-on-1,1-dioxid (Saccharin) 2,000
Polybutylmethacrylat 8,000
2,5-Dimethyl-2,5-dihydroperoxy-hexan 3,000
N,N-Dibenzylanilin 4,000
Acrylsäure 1,000

Diese Basisformulierung 1 sowie die Formulierungen 2 bis 8 jeweils bestehend aus 96% der Basisformulierung und 4% eines der erfindungsgemäßen Beschleuniger, wurden auf entfetteten Stahlschrauben M10 x 20 mit Mutter nach DIN 933, Qualität 4,6, auf ihre Klebeeigenschaften geprüft. Zur Beurteilung der beschleunigenden Wirkung der erfindungsgemäßen Beschleuniger wurde die Fingerfestigkeit (finger-tight-time) herangezogen. Unter Fingerfestigkeit wird dabei jene Zeit in min. (vom Zeitpunkt des Verschraubens an gerechnet) verstanden, nach der durch den unter leichtem Druck an eine mit Klebstoff bestrichene Mutter angelegten Finger keine Bewegung auf einer ebenfalls mit Klebstoff bestrichenen Schraube mehr möglich ist.

Zur Beurteilung der Festigkeit der Verklebung wurden Losbrech- und Weiterdrehmoment nach 24-stündiger Aushärtung unter Normklima (23°C, 50% rel. Luftfeuchte nach DIN 50014) bestimmt.

Die Lagerstabilität wurde direkt durch Lagerung bei obigem Normklima ermittelt. Die Ergebnisse der Beispiele 1 bis 8 sind in der folgenden Tabelle I zusammengefaßt.

**Tabelle I**

| Beispiel | Beschleuniger | Fingerfestigkeit (min) | Losbrechmoment (Nm) | Weiterdrehmoment (Nm) | Lagerstabilität |
|---|---|---|---|---|---|
| 1 | Keiner | 6 ± 1 | 18 ± 2 | 34 ± 5 | > 1 Jahr |
| 2 | 3,4-Dimethoxybenzolsulfonsäure-trimethylsilylester | 5 ± 1 | 20 ± 1 | 35 ± 5 | 50 Tage |
| 3 | 4-Methoxybenzolsulfonsäure-trimethylsilylester | 3 ± 1 | 21 ± 1 | 31 ± 5 | 34 Tage |
| 4 | 2,4,6-Trimethylsulfonsäure-trimethylsilylester | 1,5 ± 0 | 21 ± 1 | 32 ± 4 | 12 Tage |
| 5 | 4-Methylbenzolsulfonsäure-trimethylsilylester | 1,0 ± 0 | 21 ± 1 | 35 ± 3 | 7 Tage |
| 6 | Benzolsulfonsäure-trimethylsilylester | 0,4 ± 0 | 24 ± 2 | 41 ± 5 | 4 Tage |
| 7 | 2-Naphthalinsulfonsäure-trimethylsilylester | 0,3 ± 0 | 22 ± 2 | 37 ± 3 | 3 Tage |
| 8 | 4-Chlorbenzolsulfonsäure-trimethylsilylester | 0,25 ± 0 | 23 ± 2 | 36 ± 4 | 2 Tage |

Es zeigte sich hierbei deutlich, daß durch sukzessive Verringerung der Elektronendichte im aromatischen Ring des Beschleunigers die Fingerfestigkeit von anfänglich 6 min auf ca. 15 s absinkt, verbunden mit einem leichten Anstieg des Losbrechmoments von 18 auf 24 Nm. Die gleichzeitige Abnahme der Lagerstabilität weist ebenfalls einen deutlichen Trend auf.

Insgesamt gesehen ist es durch Anwendung der erfindungsgemäßen Beschleuniger möglich, ein quasieinkomponentiges System mit definierter Lagerstabilität erfolgreich in solchen Fällen einzusetzen, in denen durch Zweikomponentensysteme nur eine limitierte Verarbeitungszeit im Bereich von Minuten bis zu einigen Stunden existiert.

**Beispiel 9**

Eine weitere Verbesserung ist dadurch möglich, daß man durch eine geeignete Verpackung den Zeitpunkt der Aktivierung kurz vor die Anwendung legt, wodurch sich die Lagerstabilität für die Anwendung erhöht.

In eine zylindrische Polyethylenpipette (Durchmesser 9 mm, Länge 50 mm) werden 1,92 g der Klebstoffbasis gemäß Beispiel 1 eingefüllt und ein dünnwandiges Glasrohr (Durchmesser 2 mm, Länge 40 mm), welches 0,08 g Benzolsulfonsäuretrimethylsilylester eingeschmolzen enthält, wird eingeführt, worauf die Pipette mit der zugehörigen Kappe hochfrequenzverschweißt wird. In dieser Form ist die Lagerstabilität größer als ein Jahr, wie dies von einem handelsüblichen anaeroben Klebstoff gefordert wird. Vor Gebrauch wird die Aktivierung dadurch vorgenommen, daß das Glasrohr durch Biegen der Pipette gebrochen wird, so daß sich dessen Inhalt mit der Klebstoffbasis mischt. Durch Schütteln erreicht man eine homogene Verteilung. Der derart erhaltene Klebstoff kann wie ein normaler, einkomponentiger anaerober Klebstoff gehandhabt werden und ergibt bei Anwendung auf Stahlschrauben eine Fingerfestigkeit von 15-20 s.

## Patentansprüche

1. Anaerob härtende Kleb- oder Dichtstoffzusammensetzung auf Basis von Mono-, Di- und/oder Tri(meth)acrylaten, einem Redoxsystem, einem Sulfamidderivat und einem sterisch gehinderten Phenol als Stabilisatorsystem sowie üblichen Zusätzen, dadurch gekennzeichnet, daß sie als Aktivator 0,1-10 Gew.% eines Trimethylsilylesters einer aromatischen Sulfonsäure gemäß Formel I

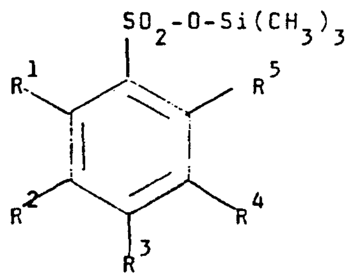

I

oder deren Gemische enthält, wobei die Reste $R^1$ bis $R^5$ jeweils unabhängig voneinander ein Wasserstoffatom, eine $C_1$-$C_4$-Alkylgruppe, ein Halogenatom oder eine $C_1$-$C_4$-Alkoxygruppe, $R^3$ auch eine Phenylgruppe, eine $C_1$- $C_4$ Alkylphenylgruppe oder eine Phenyloxygruppe und $R^1$ und $R^2$ oder $R^2$ und $R^3$ jeweils zusammen auch einen ankondensierten Benzol- oder Naphthalinring bedeuten.

2. Kleb- oder Dichtstoffzusammensetzung gemäß Anspruch 1, dadurch gekennzeichnet, daß sie den Aktivator der Formel I in einer Menge von 2 bis 5 Gew.% enthält.

3. Klebstoff- oder Dichtstoffzusammensetzung nach Anspruch 1, dadurch gekennzeichnet, daß sie den Aktivator getrennt von der Klebstoffgrundmasse in einem erst unmittelbar vor der Verwendung aufbrechbaren geschlossenen Behälter enthält.

## Revendications

1. Composition de colle ou d'étanchéité à durcissement anaérobie à base de mono-, di- et/ou tri(meth)acrylates, d'un système Redox, d'un dérivé de sulfamide et d'un phénol à empêchement stérique en tant que système stabilisant ainsi que des additifs habituels caractérisée en ce qu'elle contient, en tant qu'activateur, 0,1-10 % en poids d'un triméthylsilylester d'un acide sulfonique aromatique selon la formule I

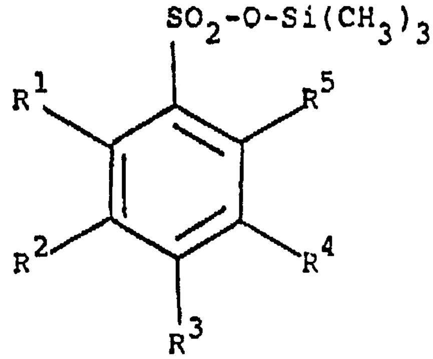

I

ou ses mélanges, dans laquelle chacun de $R^1$ à $R^5$ indique, indépendamment les uns des autres, un atome d'hydrogène, un groupe alcoyle $C_1$-$C_4$, un atome d'halogène ou un groupe alcoxy $C_1$-$C_4$, $R^3$ peut également être un groupe phényle, un groupe alkylphényle $C_1$-$C_4$ ou un groupe phényloxy et $R^1$ et $R^2$ ou $R^2$ et $R^3$ peuvent ensemble indiquer un noyau benzène ou naphtalène condensé.

2. Composition de colle ou d'étanchéité selon la revendication 1 caractérisée en ce qu'elle contient l'activateur de formule I en une quantité de 2 à 5 % en poids.

3. Composition de colle ou d'étanchéité selon la revendication 1 caractérisée en ce qu'elle contient l'activateur séparé de la masse de base de la colle dans un récipient fermé à ne rompre que directement avant l'utilisation.

**Claims**

1. Anaerobically curable adhesive or sealing composition based on mono-, di- and/or tri(meth)acrylates, a redox system, a sulfamide derivative and a sterically hindered phenol as stabilizer system and further coventional additives, characterized in that it comprises as activator 0.1 to 10% by weight of a trimethyl silyl ester of an aromatic sulfonic acid according to formula I

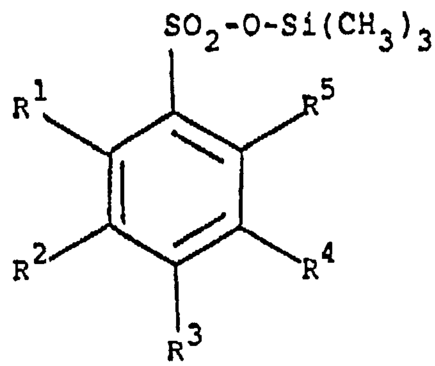

I

or their mixtures, whereby the residues $R^1$ to $R^5$ are independently of each other a hydrogen atom, a $C_1$ to $C_4$ alkyl group, a halogen atom or a $C_1$ to $C_4$ alkoxy group and $R^3$ may also be a phenyl group, a $C_1$ to $C_4$ alkyl phenyl group or a phenyloxy group and $R^1$ and $R^2$ or $R^2$ and $R^3$ each may form together a benzene or naphthalin ring condensed onto the aromatic ring.

2. Adhesive or sealing composition according to claim 1, characterized in that it comprises the activator of formula I in an amount of 2 to 5% by weight.

3. Adhesive or sealing composition according to claim 1, characterized in that it comprises the activator separately from the adhesive base composition in a closed container which may be opened only immediately prior to the use.